# EUROPEAN PATENT APPLICATION

(11) **EP 3 175 698 A1**
(43) Date of publication of application: **07.06.2017**
(21) Application number: 16201617.4
(22) Date of filing: 01.12.2016
(51) Int. Cl.: A01D 34/90, A45F 3/14, F16M 13/04

(54) **HARNESS, PARTICULARLY FOR SUPPORTING PORTABLE EQUIPMENT**

(30) Priority: 04.12.2015 IT UB20156322
(71) Applicant: De Sordi, Fabrizio, 31040 Giavera del Montello (Treviso) (IT); De Sordi, Nadia, 31040 Nervesa Della Battaglia (TV) (IT)
(72) Inventor: GAIOTTO, Maurizio, 31040 Nervesa Della Bataglia TV (IT)
(74) Representative: Modiano, Micaela Nadia

(57) **Abstract**

A harness (1), particularly for supporting portable equipment (2), comprising one or more bands (3) that wrap around the trunk (4) of the user (5). On one or more bands (3) and to the rear of the trunk (4), so as to affect the back (7) of the user (5), there is a first wing (6a) provided with at least one coupling point (17) for a first end (18) of at least one elastically deformable means (19) that passes on the shoulder (8) of the user (5). The elastically deformable means (19) has a second end (23) that can be associated with the equipment (2) and is provided internally with a cable (26) that is associated stably with the first and second ends (18, 23).

## Description

The present invention relates to a harness, particularly for supporting portable equipment, such as for example a bush-cutter or a blower.

Currently, bush-cutters of the known type are usually constituted by an electric or petrol-fueled engine assembly, which transmits motion, by means of a usually tubular frame, to a rotating head with which it is possible to associate selectively a cutting head or a blade or a circular saw.

Two handles are usually present on the frame so that the user can grip the bush-cutter with his hands to support it with both arms and be able to orient it by performing continuous movements upward or from right to left and vice versa.

One drawback that is observed in the background art resides in that the user makes an effort in handling the bush-cutter, since he is forced to support the entire weight of the bush-cutter only with the strength of his arms, and this causes, after some time, a feeling of tiredness which forces him to suspend work in order to rest the arms and the back.

Furthermore, the arms of the user, during use of the bush-cutter, must perform continuous movements which make the work even more onerous, and increase effort and the feeling of tiredness.

Such drawback is worsened by the fact that the rotating head of the bush-cutter, during use, transmits to the frame and to the handles continuous vibrations or stresses which are in turn transmitted to the arms and back of the user, making the work more burdensome and demanding.

These drawbacks are particularly and even more onerous for users who suffer from problems affecting their back or cervical vertebrae, since the concentration of the weight of the equipment on the arms, during bush-cutter use, leads them to assume an asymmetrical body position, which causes a feeling of pain that is worsened by the continuous stresses transmitted by the frame.

The same drawbacks can be reported also in other equipment that must be supported by the user, such as blowers or chainsaws.

It is also known to use a harness, which can be worn by the user and is provided laterally, at the height of the waist of the user, with a safety hook for temporary connection to a ring coupled to the bush-cutter.

However, even this solution has the drawbacks cited above, since the connection point between the harness and the bush-cutter is arranged laterally to the body and therefore it is difficult to achieve coupling/uncoupling, since it is necessary to rotate the torso and head in order to view the components to be coupled.

Furthermore, the user is forced to adjust the harness to adapt the placement of the connection point to his own height or to the dimensions of the bush-cutter or to the type of terrain on which to work.

Finally, harnesses for left-handed or right-handed people must be provided.

The aim of the present invention is to eliminate the drawbacks cited above, by providing a harness, particularly for supporting portable equipment, that makes it easy to use said portable equipment regardless of the height of the user or the dimensions or weight of the equipment or whether the user is left-handed or right-handed.

Within this aim, an object of the present invention is to provide a harness that allows even a prolonged use of the equipment without the user being affected by pain in the arms, back or cervical vertebrae.

Another object of the invention is to obtain a harness that can be worn easily and rapidly.

Another object of the invention is to provide a harness that is structurally simple, has modest manufacturing costs and can be provided with ordinary known systems.

This aim and these objects, as well as others that will become better apparent hereinafter, are achieved by a harness, particularly for supporting portable equipment, comprising one or more bands that wrap around the trunk of the user, characterized in that it comprises, on said one or more bands and to the rear of said trunk, so as to affect the back of the user, a first wing provided with at least one coupling point for a first end of at least one elastically deformable means that passes on the shoulder of said user, said elastically deformable means having a second end that can be associated with said equipment and being provided internally with a cable that is associated stably with said first and second ends.

Further characteristics and advantages of the invention will become better apparent from the detailed description of a particular but not exclusive embodiment of the harness according to the invention, illustrated by way of nonlimiting example in the accompanying drawings, wherein:
Figure 1 is a side perspective view of the harness in a first embodiment;
Figure 2 is a front view of the harness according to the preceding figure, worn by a user;
Figure 3 is a rear view of the harness according to the preceding figure, worn by the user;

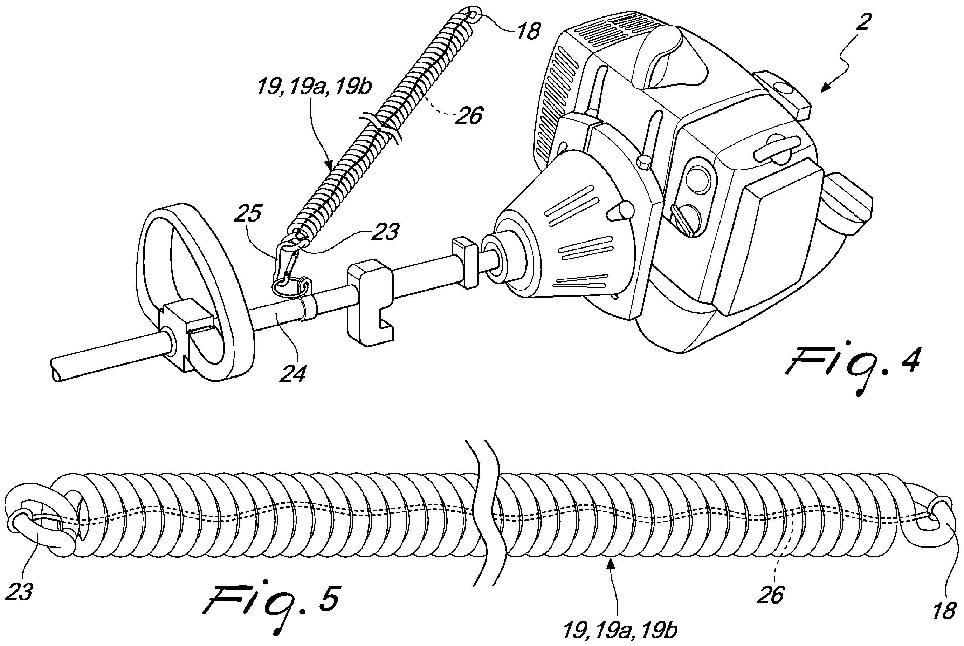

Figure 4 is an exemplifying side perspective view of a single elastically deformable element associated with a bush-cutter;
Figure 5 is a side perspective view of the elastically deformable element;
Figure 6 is a side perspective view of the harness of Figures 1, 2 and 3 worn by a user and associated with a bush-cutter;
Figure 7 is a side perspective view of the harness in a second embodiment worn by a user and associated with a bush-cutter;
Figure 8 is a view, in a detail of the preceding figure, of the interaction between the grip means and the engagement means;
Figure 9 is a view, similar to Figure 8, of the grip means and the engagement means, which do not interact;
Figure 10 is a rear view of the harness of Figure 7 worn by the user.

In the exemplary embodiments that follow, individual characteristics, given in relation to specific examples, may actually be interchanged with other different characteristics that exist in other exemplary embodiments.

Moreover, it is noted that anything found to be already known during the patenting process is understood not to be claimed and to be the subject of a disclaimer.

With reference to the figures, the reference numerals 1, 100 designate a harness, particularly for supporting portable equipment 2.

In the particular embodiments shown, by way of nonlimiting example, the use of portable equipment such as a bush-cutter 2 has been hypothesized.

The harness 1, 100 comprises one or more bands 3 that wrap around the trunk or upper body or torso 4 of the user 5.

The particular embodiments show, by way of nonlimiting example, a harness 1, 100 composed of a first band 3a that is Y-shaped so as to form a first wing 6a that is arranged to the rear of the trunk 4 so as to affect the back 7 of the user 5.

The first wing 6a is advantageously arranged centrally along the back 7 of the user 5, substantially at the backbone.

The first band 3a is also constituted by a second wing and a third wing 6b, 6c, which wrap around the shoulders 8 of the user 5 and then descend substantially parallel to each other along his chest 9.

The second wing and third wing 6b, 6c are optionally detachably connected transversely to each other by means of a strap 10 adapted to be arranged on the chest 9 of the user 5, substantially below the pectoral muscles 11, the connection occurring by means of a known first clip 12.

The free ends 13a, 13b, 13c of the first wing 6a and of the second and third wings 6b, 6c are connected stably to a second band 3b, which wraps around the lumbar region 14 of the back 7 and of the waist of the user 5.

The second band 3b is closed by means of a second clip 15, which is adapted to be arranged substantially at the abdomen 16 of the user 5.

In a different embodiment, not shown, the end 13 a of the first wing 6a is connected directly and stably both to the end 13b of the second wing 6b and to the end 13c of the third wing 6c, so as to wrap around the serratus anterior of the trunk 4 and the serratus posterior inferior or the rhomboid major of the back 7.

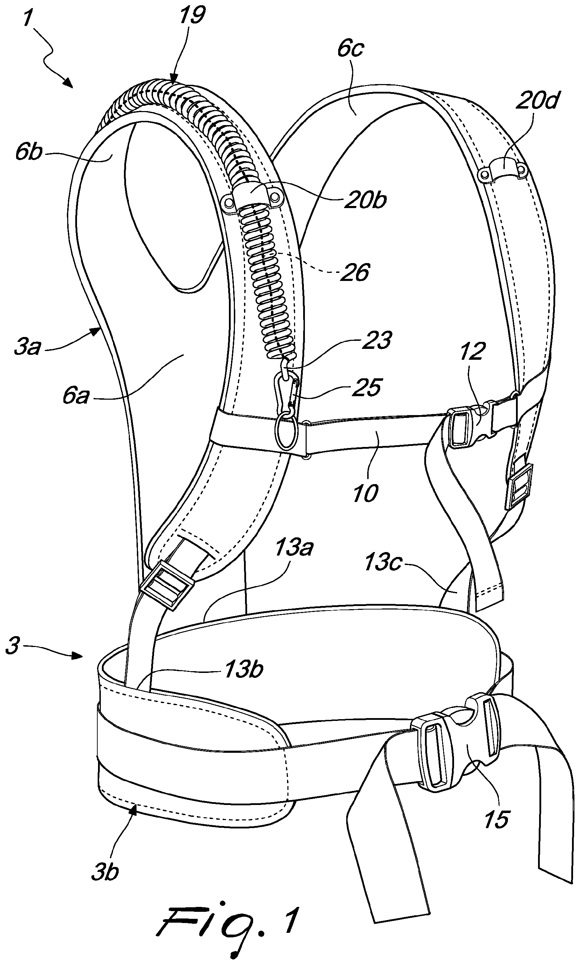

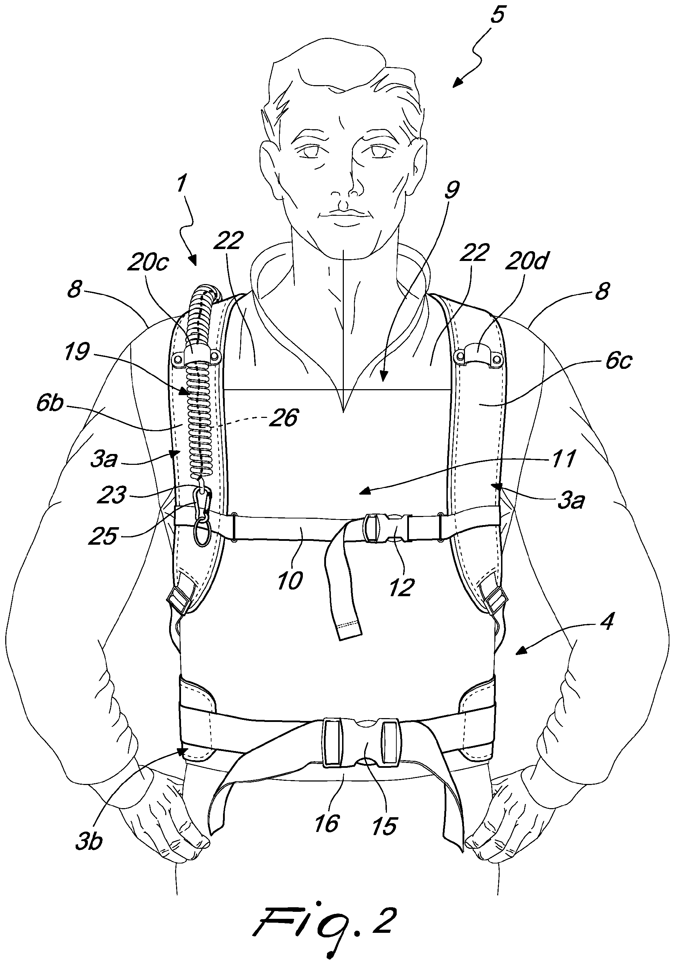

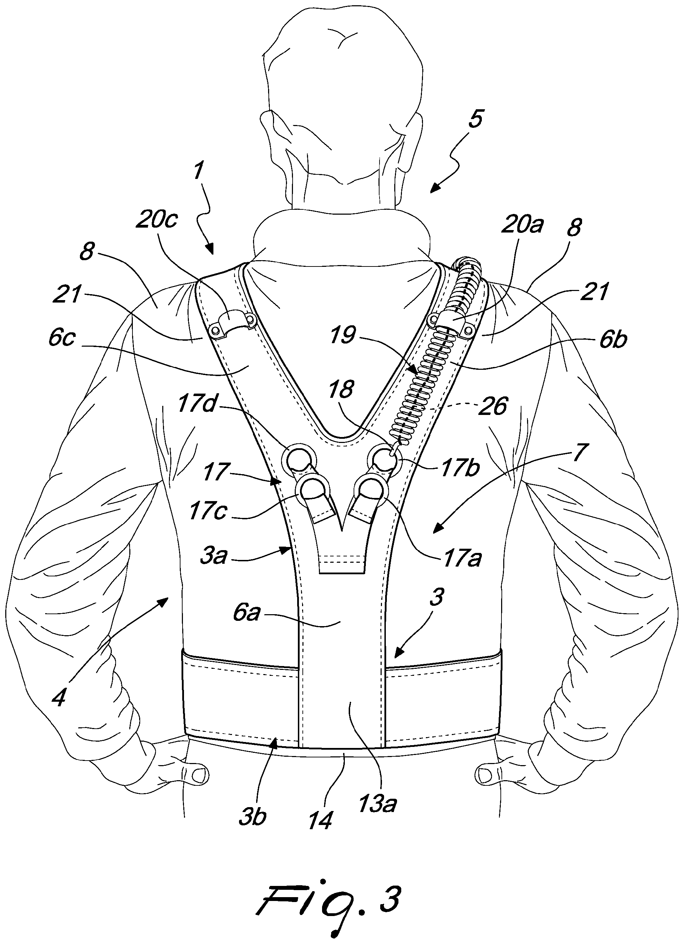

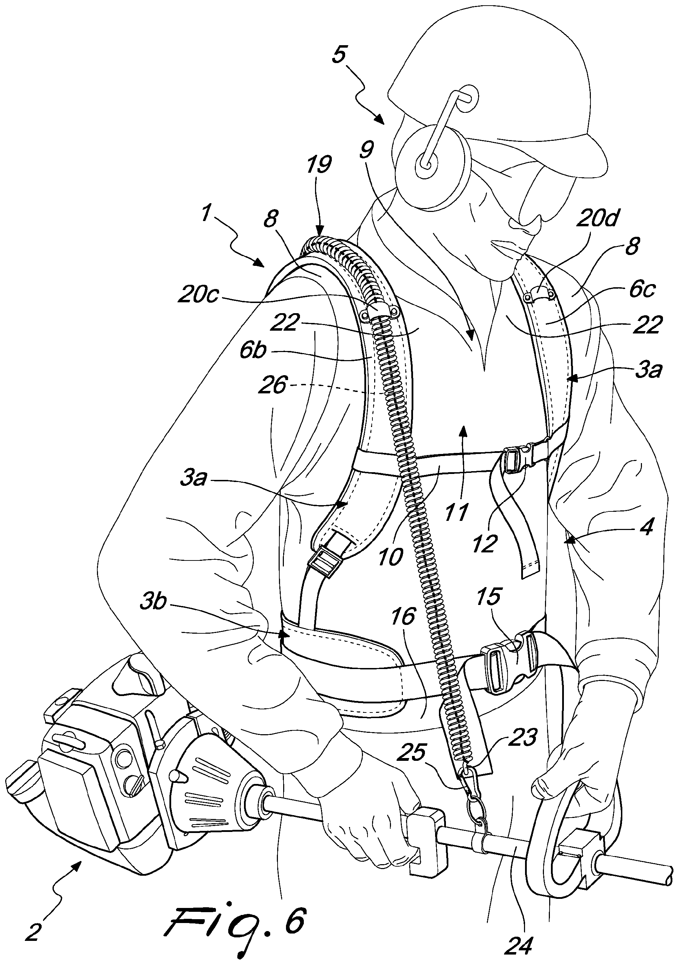

In the particular embodiment shown in Figures 1, 2, 3 and 6, at least one coupling point 17 is obtained on the first wing 6a of the first band 3 a of the harness 1 for a first end 18 of at least one elastically deformable means 19, such as for example a cylindrical closed-coil helical extension spring, which passes above the shoulder 8 of the user 5; the harness 1, therefore, can comprise for example the possibility to mount two or more elastically deformable means 19 which are sized so as to support different weights of equipment 2.

The number and placement of the coupling points 17 may vary depending on the specific requirements according to the weight of the equipment 2 to be supported and/or the weight and/or height of the user 5.

It is possible, therefore, for example to provide four coupling points 17a, 17b, 17c, 17d which are arranged in pairs one above the other on the first wing 6a and/or on the second and third wings 6b, 6c.

In the particular described embodiment, shown in Figures 1, 2, 3 and 6 by way of nonlimiting example, two coupling points 17a, 17b oriented toward the second wing 6b and two coupling points 17c, 17d oriented toward the third wing 6c have been obtained.

As an alternative, it is possible to obtain a single pair of coupling points 17 arranged or not along the same axis at the first wing 6a only.

The first end 18 of the elastically deformable means 19 is engaged with one of the coupling points 17a, 17b, 17c, 17d, depending on the specific requirements of the user 5.

At least two guiding means 20a, 20b or 20c, 20d are obtained at least on one between the second or third wing 6b, 6c of the first band 3a of the harness 1 and are adapted to support and orient the elastically deformable means 19; a guiding means 20a or 20c is arranged on the rear part respectively of the second or third wing 6b or 6c, substantially at the height of the shoulder blade 21 of the user 5, while the other means 20b or 20d is arranged on the front part respectively of the second or third wing 6b or 6c, substantially at the height of the collarbone 22 of the user.

In the particular embodiment shown in Figures 1, 2, 3 and 6, by way of nonlimiting example, four guiding means 20a, 20b, 20c, 20d arranged in pairs respectively on the second and third wings 6b, 6c are obtained.

By way of example, if the user 5 is right-handed, the first end 18 of the elastically deformable means 19 is engaged in one of the two coupling points 17a, 17b that are oriented toward the second wing 6b and the elastically deformable means 19 is made to pass in the guiding means 20a, 20b arranged on the second wing 6b of the first band 3a of the harness 1, so as to wrap around the right shoulder 8 of the user 5; the choice between the coupling point 17a and the coupling point 17b is made according to the height and shoulder girth of the user 5 or according to the equipment 2 used.

By way of example, if the user 5 is left-handed, the first end 18 of the elastically deformable means 19 is engaged in one of the two coupling points 17c, 17d oriented toward the third wing 6c and the elastically deformable means 19 is made to pass in the guiding means 20c, 20d arranged on the third wing 6c of the first band 3a of the harness 1, so as to wrap around the left shoulder 8 of the user 5; the choice between the coupling point 17c and the coupling point 17d is made according to the height and shoulder girth of the user 5 or according to the equipment 2 used.

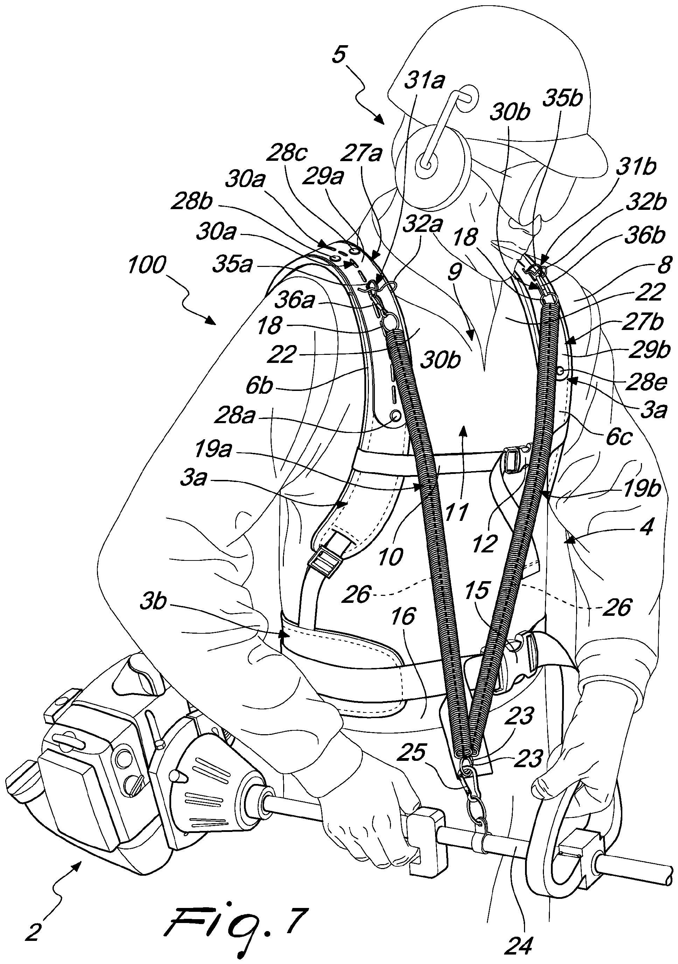

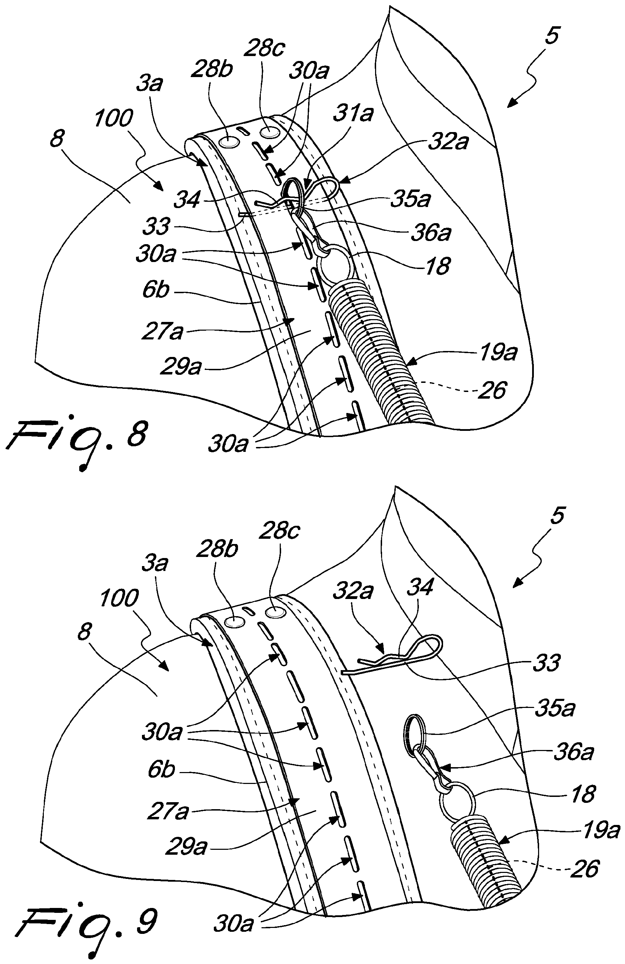

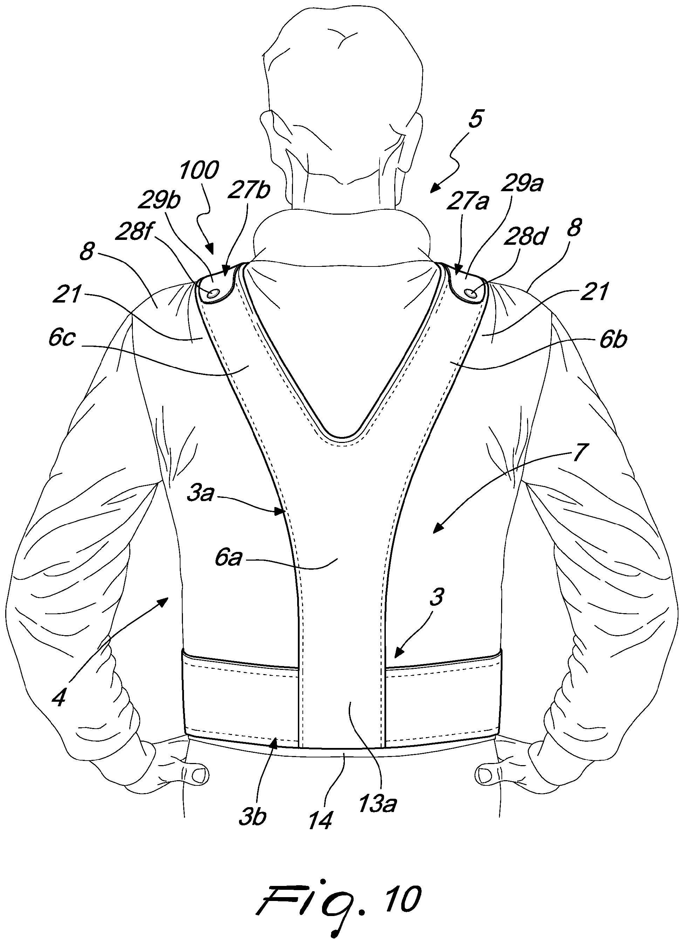

In the particular embodiment shown in Figures 7 to 10, at least one grip means 27a, 27b is stably associated on the second and third wings 6b, 6c of the first band 3a of the harness 100 and is connected to the second and third wings 6b, 6c by means of a plurality of connection means 28a, 28b, 28c, 28d, 28e, 28f, such as for example rivets or screws coupled to nuts.

Each grip means 27a, 27b is constituted by a flat plate 29a, 29b, which has in plan view a substantially rectangular shape with rounded ends, is arranged at the shoulders 8 of the user 5 and is adapted to extend to the height of the chest 11 of the user 5 so as to assume an arc-like shape.

Each plate 29a, 29b has, at the longitudinal central axis (or axis of symmetry), a plurality of holes or seats or openings or slots 30a, 30b which are longitudinal and have the same shape, preferably a rectangular one, have a chosen extension and are mutually spaced by the chosen extent.

The number and placement of said plurality of holes or seats or openings or slots 30a, 30b can vary according to the specific requirements depending on the weight of the equipment 2 to be supported and/or the weight and/or height of the user 5.

At said plurality of holes or seats or openings or slots 30a and at said plurality of holes or seats or openings or slots 30b it is possible to associate selectively an engagement means 31a, 31b.

Each engagement means 31a, 31b comprises an elastic safety clip 32a, 32b, each clip having a straight lower arm 33 and a facing upper arm 34 which is contoured so that it can flex without being deformed.

Each engagement means 31a, 31b also comprises a ring 35a, 35b which has an outside diameter that is substantially greater than the length of each one of said holes or seats or openings or slots 30a, 30b.

An interconnection element 36a, 36b is associated with each ring 35a, 35b, each element being in turn associated with the first end 18 of an elastically deformable means 19a, 19b, such as for example a cylindrical helical closed-coil extension spring, each of which is adapted to be arranged along the chest 9 of the user 5.

As an alternative, it is possible to associate the first end 18 of each elastically deformable means 19a, 19b directly with each ring 35a, 35b.

The use of each engagement means 31a, 31b provides that each ring 35a, 35b is arranged inside one of said plurality of holes or seats or openings or slots 30a, 30b arranged in the corresponding plate 35a, 35b, choosing the one most suitable for the specific requirement depending on the weight of the equipment 2 to be supported and/or the weight and/or height of the user 5 and/or the length of the springs 19a, 19b.

Each ring 35a, 35b is then associated with the corresponding plate 29a, 29b by means of an elastic safety clip 32a, 32b, the lower arm 33 and upper arm 34 of which are interposed in a clamp-like arrangement between each one of the plates 35a, 35b and around which each ring 35a, 35b is arranged.

Each elastically deformable means 19, 19a, 19b has a second end 23 which can be associated with the frame 24 of the equipment 2 by means of a connection element 25, such as for example a spring-clip.

Each elastically deformable means 19, 19a, 19b is provided internally with a cable 26, preferably made of metallic material, such as for example steel, or other materials that have equivalent characteristics, such as for example nylon, which is stably associated with the first and second ends 18, 23.

The cable 26 is longer than the elastically deformable means 19, 19a, 19b when it is not elongated and performs the task of not allowing the extension of the elastically deformable means 19, 19a, 19b beyond a given length depending on the weight of the equipment 2 or the height of the user or the type of terrain on which the work is to be performed, and this is done in order to avoid a mechanical stress.

It has thus been found that the invention has achieved the intended aim and objects, a harness 1, 100 having been obtained which is particularly usable to facilitate the use of portable equipment 2 regardless of the height of the user 5 or the dimensions or weight of said equipment 2 or the fact that the user 5 is right-handed or left-handed.

Multiple coupling points 17a, 17b, 17c, 17d are in fact obtained on the harness 1, for example two 17a, 17b oriented toward the second wing 6b and two 17c, 17d oriented toward the third wing 6c, thus giving the user 5 the possibility to choose the most appropriate coupling point according to his own requirements.

In particular, if the user 5 is right-handed, he chooses the most appropriate coupling point, depending on the weight of the equipment 2 that he must support and depending on his own height, between one of the two coupling points 17a, 17b, on which the first end 18 of the elastically deformable means 19 engages; the elastically deformable means 19 is then made to pass through the guiding means 20a, 20b arranged on the second wing 6b of the first band 3a of the harness 1, so as to wrap around the right shoulder 8 of the user 5; the user 5 then associates the second end 23 with the frame 24 of the mechanical equipment 2.

If the user 5 is left-handed, he chooses the most appropriate coupling point, depending on the weight of the equipment 2 that he must support and depending on his own height, between one of the two coupling points 17c, 17d, on which the first end 18 of the elastically deformable means 19 engages; the elastically deformable means 19 is then made to pass through the guiding means 20c, 20d arranged on the third wing 6c of the first band 3a of the harness 1, so as to wrap around the left shoulder 8 of the user 5; the user 5 then associates the second end 23 with the frame 24 of the mechanical equipment 2.

Multiple coupling points, such as the plurality of longitudinal holes or seats or openings or slots 30a, 30b that are present on the plates 29a, 29b, are obtained on the harness 100 as well, thus giving the user 5 the possibility to choose the most appropriate coupling point depending on his own requirements.

In particular, if the user 5 chooses the most appropriate coupling point, depending on the weight of the equipment 2 that he must support, depending on his height and on the length of the spring 19a, 19b, among one of said plurality of holes or seats or openings or slots 30a of the plate 35a and between one of said plurality of holes or seats or openings or slots 30b of the plate 35b, on each of which the corresponding engagement means 31a, 31b is engaged which is connected directly or indirectly to the first end 18 of each elastically deformable means 19a, 19b; the user 5 then associates the second ends 23 of each elastically deformable means 19a, 19b with the frame 24 of the mechanical equipment 2.

Furthermore, it has been found that the harness 1, 100 allows even prolonged use of the equipment 2 without the user being affected by pain in the arms, back or cervical vertebrae, respectively by virtue of the presence and the particular placement of the elastically deformable means 19 or of the elastically deformable means 19a, 19b, which allow on the one hand to absorb the vibrations that arrive from the equipment 2 and on the other hand allow the user 5 to support the weight of the equipment 2 in a manner that is distributed along multiple parts of the trunk 4, i.e., the back 7, the shoulders 8 and the chest 9.

Moreover, it is observed that the elastically deformable means 19 in the harness 1 and the elastically deformable means 19a, 19b in the harness 100 allow complete and free maneuverability in space of the engaged equipment 2.

Furthermore, it has been found that the harness 1, 100 can be worn by the user easily and rapidly.

The invention is of course susceptible of numerous modifications and variations, all of which are within the scope of the appended claims.

The materials used, as well as the dimensions that constitute the individual components of the invention, may of course be more pertinent according to the specific requirements.

The characteristics indicated as advantageous, convenient or the like, may also be omitted or be replaced with equivalents.

The disclosures in Italian Patent Application no. 102015000080286 (UB2015A006322), from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A harness (1), particularly for supporting portable equipment (2), comprising one or more bands (3) that wrap around the trunk (4) of the user (5), **characterized in that** it comprises, on said one or more bands (3) and to the rear of said trunk (4), so as to affect the back (7) of the user (5), a first wing (6a) provided with at least one coupling point (17) for a first end (18) of at least one elastically deformable means (19) that passes on the shoulder (8) of said user (5), said elastically deformable means (19) having a second end (23) that can be associated with said equipment (2) and being provided internally with a cable (26) that is associated stably with said first and second ends (18, 23).

2. The harness (1) according to claim 1, **characterized in that** it comprises guiding and retention means (20a, 20b, 20c, 20d), which are adapted to support and orient said elastically deformable means (19) on said harness (1).

3. The harness (1) according to claims 1 and 2, **characterized in that** said cable (26) is longer than said elastically deformable means (19) when it is not elongated.

4. The harness (1) according to claims 1 and 3, **characterized in that** it comprises a first band (3a) that is Y-shaped so as to form said first wing (6a), which is arranged centrally along said back (7) of said user (5), substantially at the backbone, and a second wing and a third wing (6b, 6c), which wrap around said shoulders (8) of said user (5) to then descend substantially parallel to each other along his chest (9), the free ends (13a, 13b, 13c) of said first, second and third wings (6a, 6b, 6c) being connected stably to a second band (3b) that wraps around the lumbar region (14) of said back (7) and waist of said user (5) or, as an alternative, said end (13a) of said first wing (6a) being connected stably directly both to said end (13b) of said second wing (6b) and to said end (13c) of said third wing (6c) so as to wrap around the serratus anterior of said trunk (4) and the serratus posterior inferior or the rhomboid major of said back (7).

5. The harness (1) according to claims 1 and 4, **characterized in that** it is provided with four coupling points (17a, 17b, 17c, 17d), which are arranged in pairs one above the other on said first wing (6a) and/or on said second and third wings (6b, 6c), said coupling points (17a, 17b) being oriented toward said second wing (6b) and said coupling points (17c, 17d) being oriented toward said third wing (6c).

6. The harness (1) according to claims 1 and 5, **characterized in that** at least two guiding means (20a, 20b), (20c, 20d) are associated at least on one between said second or third wing (6b, 6c) of said first band (3a), said guiding means (20a) or (20c) being arranged on the rear part respectively of said second or third wing (6b) or (6c), substantially at the height of the shoulder blade (21) of said user (5), said guiding means (20b) or (20d) being arranged on the front part respectively of said second or third wing (6b) or (6c), substantially at the height of the collarbone (22) of said user (5).

7. The harness (1) according to claims 1 and 5, **characterized in that** it comprises four guiding means (20a, 20b, 20c, 20d) which are arranged in pairs respectively on said second and third wings (6b, 6c), said guiding means (20a, 20c) being arranged on the rear part respectively of said second and third wings (6b, 6c), substantially at the height of the shoulder blade (21) of said user (5), said guiding means (20b, 20d) being arranged on the front part respectively of said second and third wings (6b or 6c), substantially at the height of the collarbone (22) of said user (5).

8. The harness (1) according to one or more of the preceding claims, **characterized in that** said first end (18) of said elastically deformable means (19) is adapted to be engaged in one of said two coupling points (17a, 17b) oriented toward said second wing (6b), said elastically deformable means (19) being adapted to be made to pass in said guiding means (20a, 20b) arranged on said second wing (6b) of said first band (3a) of said harness (1), so as to wrap around said right shoulder (8) of said user (5).

9. The harness (1) according to one or more of the preceding claims, **characterized in that** said first end (18) of said elastically deformable means (19) is adapted to be engaged in one of said two coupling points (17c, 17d) oriented toward said third wing (6c), said elastically deformable means (19) being adapted to be made to pass in said guiding means (20c, 20d) arranged on said second wing (6b) of said first band (3a) of said harness (1), so as to wrap around said left shoulder (8) of said user (5).

10. The harness (1) according to one or more of the preceding claims, **characterized in that** it is provided with a pair of coupling points (17) arranged along the same axis at said first wing (6a) only.

11. A harness (100), particularly for supporting portable equipment (2), comprising one or more bands (3) that wrap around the trunk (4) of the user (5), **characterized in that** it comprises a first wing (6a), which is arranged to the rear of said trunk (4) of said user (5), and a second wing and a third wing (6b, 6c), which wrap around the shoulders (8) of said user (5) and descend in a substantially parallel arrangement along the chest (9), at least one grip means (27a, 27b) being associated with said second and third wings (6b, 6c), engagement means (31a, 31b) being selectively associable with each one of said grip means and being connected directly or indirectly to a first end (18) of at least one elastically deformable means (19a, 19b) that is arranged along said chest (9) of said user (5), each one of said elastically deformable means (19a, 19b) having a second end (23) that can be associated with said equipment (2) and being provided internally with a cable (26) that is associated stably with said first and second ends (18, 23).

12. The harness (100) according to claim 11, **characterized in that** each one of said cables (26) is longer than said elastically deformable means (19a, 19b) in the non-elongated condition.

13. The harness (100) according to claim 11, **characterized in that** each one of said grip means (27a, 27b), connected to said second and third wings (6b, 6c) by means of a plurality of connection means (28a, 28b, 28c, 28d, 28e, 28f) is constituted by a flat plate (29a, 29b), which has, in plan view, a substantially rectangular shape with rounded ends, is arranged at said shoulders (8) of said user (5) and is adapted to extend to the height of the chest (11) of said user (5) so as to assume an arc-like shape, each plate (29a, 29b) having, at the central longitudinal axis, or axis of symmetry, a plurality of holes or seats or openings or slots (30a, 30b) which are longitudinal and have the same shape.

14. The harness (100) according to claims 11 and 13, **characterized in that** one of said engagement means (31a, 31b) is selectively associable at said plurality of holes or seats or openings or slots (30a) and at said plurality of holes or seats or openings or slots (30b), each engagement means comprising an elastic safety clip (32a, 32b) that has a straight lower arm (33) and a facing upper arm (34) that is contoured so that it can flex without being deformed, each one of said engagement means (31a, 31b) further comprising a ring (35a, 35b) that has an outside diameter that is substantially greater than the length of each one of said holes or seats or openings or slots (30a, 30b).

15. The harness (100) according to claims 11 and 14, **characterized in that** said first end (18) of each one of said elastically deformable means (19a, 19b) is adapted to be engaged with each one of said rings (35a, 35b) that is arranged within one of said plurality of holes or seats or openings or slots (30a, 30b) arranged in the corresponding plate (35a, 35b), each ring (35a, 35b) being subsequently associated with the corresponding plate (29a, 29b) by means of said elastic safety clip (32a, 32b), the said lower and upper arms (33, 34) of which are interposed in a clamp-like arrangement between each one of said plates (35a, 35b) and around which each one of said rings (35a, 35b) is arranged.

16. The harness (100) according to claims 11 and 14, **characterized in that** an interconnection element (36a, 36b) is associated with each one of said rings (35a, 35b), each interconnection element being in turn associated with said first end (18) of said elastically deformable means (19a, 19b), each one of said rings (35a, 35b) being arranged within one of said plurality of holes or seats or openings or slots (30a, 30b) arranged in the corresponding plate (35a, 35b), each ring (35a, 35b) being subsequently associated with the corresponding said plate (29a, 29b) by means of said elastic safety clip (32a, 32b), the said lower and upper arms (33, 34) of which are interposed in a clamp-like arrangement between each one of said plates (35a, 35b) and around which each one of said rings (35a, 35b) is arranged.

17. The harness (100) according to one or more of claims 11 to 16, **characterized in that** it comprises a first band (3a) that is Y-shaped so as to form said first wing (6a), arranged centrally along the back (7) of said user (5), substantially at the backbone, and a second and third wing (6b, 6c), which wrap around said shoulders (8) of said user (5) to then descend in a substantially mutually parallel arrangement along said chest (9), the free ends (13a, 13b, 13c) of said first, second and third wings (6a, 6b, 6c) being connected stably to a second band (3b) that wraps around the lumbar region (14) of said back (7) and waist of said user (5) or, as an alternative, said end (13a) of said first wing (6a) being connected directly and stably both to said end (13b) of said second wing (6b) and to said end (13c) of said third wing (6c) so as to wrap around the serratus anterior of said trunk (4) and the serratus posterior inferior or the rhomboid major of said back (7).
